# EUROPÄISCHE PATENTSCHRIFT

(11) **EP 3 011 144 B1**
(45) Veröffentlichungstag und Bekanntmachung des Hinweises auf die Patenterteilung: **02.08.2017**
(21) Anmeldenummer: 14728182.8
(22) Anmeldetag: 04.06.2014
(51) Int. Cl.: F22B 1/18, F01D 25/30, F02C 6/18, F22B 35/00, F01K 23/10

(54) **VERFAHREN UND VORRICHTUNG ZUR REGELUNG DER EINDÜSUNG VON WASSER IN DEN RAUCHGASKANAL EINER GAS- UND DAMPFTURBINENANLAGE**
METHOD AND DEVICE FOR CONTROLLING THE SPRAYING OF WATER INTO THE FLUE GAS DUCT OF A GAS AND STEAM TURBINE INSTALLATION
PROCÉDÉ ET DISPOSITIF DE RÉGULATION DE L'INJECTION D'EAU DANS LE CANAL DE GAZ DE FUMÉE D'UNE INSTALLATION DE TURBINE À GAZ ET TURBINE À VAPEUR

(30) Priorität: 18.06.2013 DE 102013211376
(43) Veröffentlichungstag der Anmeldung: 27.04.2016
(73) Patentinhaber: Siemens Aktiengesellschaft, 80333 München (DE)
(72) Erfinder: LAUZAT, Thorsten, 45289 Essen (DE); TSCHETSCHIK, Denis, 91088 Bubenreuth (DE)
(86) Internationale Anmeldenummer: PCT/EP2014/061536
(87) Internationale Veröffentlichungsnummer: WO 2014/202384

(56) Entgegenhaltungen:
- EP-A1- 0 579 061
- US-A- 3 799 249
- US-A1- 2009 205 310
- US-A1- 2012 260 667

## Beschreibung

Die Erfindung betrifft ein Verfahren zur Regelung der Abgas- und Dampftemperaturen mittels der Eindüsung von Wasser in den Rauchgaskanal einer Gas- und Dampfturbinenanlage (GUD), bei dem die im entspannten Rauchgas (Abgas) der Gasturbine enthaltene Wärme zur Erzeugung von Dampf für die Dampfturbine genutzt wird. Sie richtet sich weiter auf eine nach diesem Verfahren betriebene Gas- und Dampfturbinenanlage.

Bei einer Gas- und Dampfturbinenanlage wird die im entspannten Rauchgas der Gasturbine enthaltene Wärme zur Erzeugung von Dampf für die Dampfturbine genutzt. Die Wärmeübertragung erfolgt in einem der Gasturbine nachgeschalteten Abhitzedampferzeuger (AHDE), in dem Heizflächen in Form von Heizrohren oder Rohren in Rohrbündeln angeordnet und in den Wasser-Dampf-Kreislauf der Dampfturbine geschaltet sind. Abhitzedampferzeuger und Dampfturbine bilden den Dampfteil der Gas- und Dampfturbinenanlage. Die Gasturbine ist im Allgemeinen so ausgelegt, dass deren Abgasparameter (Temperatur, Massenstrom, Überdruck) in weiten Betriebsbereichen zu den Eintrittsparametern der nachgeschalteten Systeme passen.

Im Betrieb einer derartigen Anlage ist allerdings bei verschiedenen Betriebszuständen die in den Dampferzeuger eingebrachte Wärmeleistung unterschiedlich. Dabei treten häufig kritische Betriebszustände infolge des unterschiedlichen dynamischen Verhaltens der Anlagenkomponenten. Diese entstehen aufgrund der vergleichsweise großen Verzögerungs- oder Reaktionszeiten sowie unterschiedlicher Sensibilitäten der Dampfturbinenanlage gegenüber der Gasturbinenanlage. So treten z.B. im Anfahr- oder Lastwechselbetrieb, insbesondere bei sogenannten Schnellstarts oder raschen Laständerungen, große Temperaturgradienten und/oder zeitliche Änderungen der Temperatur sowie maßgebliche Änderungen des Massenstroms des entspannten Rauchgases auf. Daher wird üblicherweise die Gasturbinenanlage im Anfahr- und Lastwechselbetrieb temperatur- und leistungsmäßig beschränkt.

Eine Temperaturmesseinrichtung und Regelung für die Heißgastemperatur einer Gasturbine ist in der EP 1 462 633 beschrieben. Die EP 1 442 203 B1 beschreibt ein Verfahren zur Steuerung der Kühlluftmassenströme einer Gasturbinengruppe. Dem Problem von auftretenden großen Temperaturgradienten bei Schnellstarts oder raschen Laständerungen wird in diesen Dokumenten jedoch nicht entgegnet.

Um diesem Problem entgegen zu wirken können Gasturbine und Dampfteil durch einen zwischen der Gasturbine und Abhitzedampferzeuger geschalteten Bypasskamin entkoppelt werden. So kann bei einem Betriebsfall, der für den Dampferzeuger einen kritischen Zustand darstellt, das entspannte Rauchgas über den Bypasskamin vor dem Dampferzeuger abgeleitet werden. Für eine Gas- und Dampfturbinenanlage bedeutet dies eine Absenkung der Leistung sowie einen verringerten Wirkungsgrad.

Ist kein Bypasskamin vorhanden, lassen sich Gasturbine und Abhitzedampferzeuger nicht voneinander entkoppeln. Bei einer Gas- und Dampfturbinenanlage ohne Bypasskamin tritt ein kritischer Betriebszustand insbesondere dann auf, wenn die Anlage im Teillastbereich vor allem bei hohen Umgebungstemperaturen betrieben wird. Da kein Bypasskamin vorhanden ist, wird der Dampferzeuger zwangsweise mit betrieben. Damit die Temperatur im Dampferzeuger unterhalb der zulässigen Auslegungsgrenze für die Dampfleitungen, die Dampfturbine und/oder die Umleitstation bleibt, muss der im Dampferzeuger produzierte Dampf abgekühlt werden. Die Leittechnik der Kraftwerksanlage muss folglich bei der zwangsläufig sinkenden Dampfproduktion im Dampferzeuger die Vermeidung einer unzulässigen Erhöhung der Materialtemperatur der Wärmetauscherrohre und Sammler infolge unzulässig hoher Temperaturen an den Heizflächen gewährleisten. Dies fordert die künstliche Absenkung der Rauchgastemperatur der Gasturbine. Solch eine Betriebsweise ist mit Wirkungsgradverlusten der Gesamtanlage verbunden, da die im Rauchgas vorhandene Wärmeenergie abgesenkt und somit teilweise ungenutzt bleibt.

Dieser Zwangsbetrieb hat durch die starke Kopplung und Abhängigkeit von Gasturbine und Dampfteil generelle negative Einflüsse auf die Flexibilität der Anlage, da der Dampfteil erst mit deutlicher Verzögerung und sehr komplex auf die durch die Gasturbine bereitgestellte Abhitze reagiert.

Um diesem Problem zu begegnen sind in der Europäischen Patentschrift EP 0 579 061 A1 eine Vorrichtung und ein Verfahren zum Betrieb einer Gas- und Dampfturbinenanlage beschrieben, welches bei allen Betriebszuständen, also auch bei kritischen Zuständen im Anfahr- oder Lastwechselbetrieb, eine möglichst schonende Betriebsweise bei gleichzeitig hohem Gesamtwirkungsgrad ermöglicht. Dazu ist ein Verfahren offenbart bei dem bei Erreichen eines kritischen Betriebszustandes der Gas- und Dampfturbinenanlage die Temperatur des entspannten Rauchgases durch Einbringen von Wasser in das entspannte Rauchgas verringert wird. Das Wasser wird dabei in den Rauchgaskanal durch eine Eindüsevorrichtung eingedüst. Die einzuführende Wassermenge wird in Abhängigkeit von der Rauchgastemperatur eingestellt. Dazu sind ein Stellglied, ein Steuerelement und zwei Temperatursensoren im Rauchgaskanal vorgesehen. Die Temperatursensoren sind im Rauchgaskanal nach der Eindüsevorrichtung angeordnet. Die Temperatursensoren erfassen somit die Temperatur des Rauchgases, welches bereits durch eingespritztes Wasser herab gekühlt ist. Das Steuerelement vergleicht die gemessene Ist-Temperatur mit einer vorgegebenen Soll-Temperatur und regelt bei Abweichung zwischen Soll- und Ist-Temperatur die einzuführende Wassermenge.

Nachteil an Stand der Technik ist vor allem, dass durch die Wassereindüsung vor den Messstellen die Messergebnisse verfälscht werden, was bei stationären Betriebsweisen, aber insbesondere auch bei instationären Betriebsweisen der Gasturbine zu einer fehlerhaften Bestimmung der Verbrennungstemperatur in der Gasturbine führt, und somit einen stark negativen Eingriff in deren Regelung vornimmt. Zu den stark verfälschten Messwerten kommt es, da durch das eingedüste Wasser starke Schwankungen in der Temperaturverteilung hervorgerufen werden.

Aufgabe der Erfindung ist es, ein Verfahren und eine Vorrichtung anzugeben, über welche sowohl ein störungsfreier Betrieb, als auch die Flexibilität einer Gas- und Dampfturbinenanlage ohne Bypasskamin gegenüber dem Stand der Technik derart erhöht werden kann, dass eine verbesserte Anlagenverfügbarkeit bei gleichzeitig schonender Betriebsweise der Gas- und Dampfturbinenanlage gegeben ist.

Die auf ein Verfahren gerichtete Aufgabe wird durch ein Verfahren zum Betreiben einer Gas- und Dampfturbinenanlage gelöst, bei dem die im entspannten Rauchgas der Gasturbine enthaltene Wärme zur Erzeugung von Dampf für die Dampfturbine genutzt wird, indem bei Eintreten eines kritischen Betriebszustands die Temperatur des entspannten Rauchgases durch Einbringen von Wasser in das entspannte Rauchgas in den Rauchgaskanal zwischen der Gasturbine und dem strömungstechnisch nachgeschalteten Abhitzedampferzeuger verringert wird. Dabei wird erfindungsgemäß wenigstens eine erste Rauchgastemperatur des Rauchgases vor der Einbringung von Wasser in das Rauchgas gemessen, und aus dieser gemessenen Rauchgastemperatur eine mittlere Verbrennungstemperatur der Gasturbine bestimmt, und die Menge an einzudüsendem Wasser anhand einer Regelfunktion eingestellt, der die mittlere Verbrennungstemperatur zu Grunde liegt.

Die Erfindung macht sich die Erkenntnis aus dem Stand der Technik zu Nutze, und erreicht eine Reduzierung der Rauchgastemperatur durch das Eindüsen von Wasser in den Rauchgaskanal zwischen Gasturbine und Dampferzeuger. Im Unterschied zum Stand der Technik wird die einzuführende Wassermenge jedoch nicht nur in Abhängigkeit von einer Rauchgastemperatur bestimmt, die nach den Wasserdüsen gemessen wird, sondern in Abhängigkeit von einer komplexen Regelfunktion aus den mittleren Verbrennungstemperatur der Gasturbine.

Als Stellgröße für die Regelung dient der Wassermassenstrom, welcher in den Rauchgaskanal der Gasturbine eingedüst wird. Mit dieser Stellgröße kann sehr schnell und effektiv die Regelgröße eingestellt werden. Bei Einbindung dieser Stellgröße in die Blockleitebene, werden Gasturbine und Dampfturbine in weiten Teilen (evtl. nahezu im gesamten Betriebsbereich) thermisch entkoppelt. Dies führt dazu, dass derzeit bestehende Regel- und Betriebseinschränkungen nicht mehr gegeben sein werden und entfallen sowie die Verfügbarkeit der Anlage nicht gefährdet wird.

Durch die nun wesentlich genauere, von der Wassereindüsung nicht betroffene Messung der Rauchgastemperatur und somit einer sehr genauen Bestimmbarkeit der mittleren Verbrennungstemperatur sowie die regeltechnische Verbindung des Einspritzwassersystems für Abgas in die Regelkreise der Dampftemperatursteuerung sind eine Reihe an Problemen gelöst, die durch das bisherige Verfahren ungelöst blieben:
So kann bei bestehenden Anlagen durch die Erfindung das Problem behoben werden, dass, wenn Parameter der Gasturbine durch Einbau von Upgrades geändert werden, der Dampfteil oft nicht mehr im optimalen Betriebsbereich arbeitet oder sogar der zulässige und stabile Betrieb der einzelnen Komponenten des Wasser-Dampf-Kreislaufes nicht mehr garantiert werden kann.

Durch die Erfindung kann auch der Emissionsausstoß reduziert werden. So musste bislang bei Betriebsarten mit tiefen Teillasten die Abgastemperatur der Gasturbine soweit reduziert werden, dass die Belastungsgrenzen des Dampferzeugers nicht überschritten wurde. Dies führte bei der Gasturbine zu einem erhöhten Ausstoß an CO. Damit der Ausstoß an CO der Gasturbine nicht zu hoch wurde und das jeweilige Limit der Anlage überschritten wird, wurde die minimale Leistung der Gasturbine bei Erreichen des CO-Limits angehoben, obwohl das Potenzial besteht, die Gasturbine in noch tieferen Lasten fahren zu können. Dieser Zustand hat einen starken negativen Einfluss auf die Flexibilität der Anlage.

Durch das erfindungsgemäße geregelte Eingreifen der Wassereindüsung anhand einer sehr genau bestimmten Regelgröße als Funktion der mittleren Verbrennungstemperatur, muss bei tiefen Teillasten die Abgastemperatur der Gasturbine nicht gesenkt werden, um den Dampferzeuger zu schützen. Bleibt die Abgastemperatur konstant, bzw. kann diese sogar erhöht werden, verbleiben auch die CO-Emissionen innerhalb der vorgegebenen Limits. Der Vorteil dieser Betriebsweise wäre nicht nur eine Verringerung von CO-Emissionen, sondern auch die Möglichkeit, die Anlage in sehr tiefen Teillasten stabil und optimal mit vergleichbar hohem Wirkungsgrad zu betreiben und somit flexibel und zuverlässig reagieren zu können und erheblich Brennstoff einzusparen.

Beim Startvorgang der Anlage (insbesondere beim Kaltstart) musste die Gasturbine den Dampferzeuger langsam aufheizen und auf die Verfügbarkeit des Wasser-Dampfkreislaufs warten. Dazu fährt die Gasturbine verhältnismäßig lange (etwa 1 Stunde oder länger) auf Teillast. In diesem Zeitraum erzeugt die Gasturbine nicht nur verhältnismäßig hohe Emissionen bei sehr geringer Leistung, sondern büßt auch stark ihre Leistung, Effektivität und Flexibilität ein. Zudem wird vergleichsweise mehr Brennstoff benötigt, welcher nicht sehr gewinnbringend in elektrische Leistung gewandelt werden kann.

Wird beim Startvorgang gemäß der Erfindung geregelt Wasser eingebracht, kann hierdurch die Kesseleintrittstemperatur dermaßen eingeregelt werden, dass die Gasturbine auf Volllast fahren kann, obwohl der Dampferzeuger und der Wasser-Dampf-Kreislauf noch nicht vorgewärmt sind, und somit noch nicht betrieben werden kann. Die erfindungsgemäße Regelung der Eintrittstemperatur des Dampferzeugers über die Wassereindüsung kann dann dafür sorgen, dass der Dampferzeuger langsam (also den Betriebsvorgaben entsprechend) vorgewärmt wird und allmählich Leistung aufnehmen kann. Der Vorteil durch die erfindungsgemäße Regelung liegt nicht nur in einer erheblichen Zeitersparnis beim vollen Anfahren der Gasturbine, sondern auch bei einer erheblichen Brennstoffeinsparung, sowie einer gravierenden Einsparung von Emissionen, insbesondere CO. Eine weitere Anwendung der Regelung wäre dann gegeben, wenn die Gasturbine nur für kurze Zeit fahren soll, um z.B. Spitzenlasten abzudecken. In diesem Fall würde der Dampfteil einfach von der Gasturbine entkoppelt werden. Somit wird durch die erfindungsgemäße Regelung die gesamte Flexibilität der Anlage erheblich erweitert.

Bei hohen Umgebungstemperaturen wurden sowohl bei Voll- als auch bei Teillasten bislang häufig die Limits des Dampferzeugers erreicht bzw. überschritten. Damit der Betrieb der Anlage bei hohen Umgebungstemperaturen gewährleistet ist, musste bislang im Extremfall die Abgastemperatur der Gasturbine abgesenkt werden, was zu Leistungs- und Wirkungsgradverlust führt. Gemäß der Erfindung kann nun durch die genaue Regelung der Wassereindüsung bei hohen Umgebungstemperaturen die Gasturbinen-Abgastemperatur sowie andere Parameter (z.B. Dampftemperaturen) den Kessel- und Dampfturbinenlimits angepasst werden. Somit kann die Gasturbine weiterhin in ihrem optimalen Bereich betrieben werden und es kommt nicht zu einer Verringerung von Leistung und Wirkungsgrad.

Bei Einbau von Upgrades in die Gasturbine hinsichtlich erhöhter Gasturbinen-Feuerungstemperatur, wurden bislang häufig die Limits des Dampferzeugers erreicht und in weiten Bereichen überschritten. Die Kombination der erfindungsgemäß geregelten Wassereindüsung ermöglicht den Einbau von Upgrades und Weiterentwicklungen in Gasturbinen hinsichtlich erhöhter Feuerungstemperatur, da nun die Limits des Dampferzeugers keine Beschränkung mehr darstellen.

Die Regelung von Gasturbine und Dampferzeuger hing bislang sehr stark voneinander ab und kann ohne Bypasskamin nicht getrennt durchgeführt werden. Durch die erfindungsgemäße genaue Regelung der Wassereindüsung und Integration dieser Regelung in die Blockleitung, werden Gasturbine und Dampfteil in sehr weiten Betriebsbereichen voneinander entkoppelt. Dadurch kann die gesamte Anlage optimierter und flexibel betrieben werden. Die jeweiligen Vorteile von Gas- und Dampfturbine können nahezu voll ausgenutzt werden.

Die Temperatursensoren im Rauchgaskanal sind Messstellen, die ohnehin für die Bestimmung der Verbrennungstemperatur in der Gasturbine benötigt werden. Die erste Messstelle dient zur Messung der Rauchgastemperatur am Eintritt des Rauchgaskanals. Diese befindet sich nach dem Austritt der Gasturbine. Gerade bei instationärem Betrieb der Gasturbine kommt es durch Schwankungen in der Rauchgasströmung zu großen Messunsicherheiten der ersten Messstelle. Daher wird durch die zweite Messstelle zusätzlich die Temperatur am Ende des Rauchgaskanals gemessen, wo die Schwankungen in der Strömung des Rauchgases geringer sind. Bei instationären Zuständen wird durch den zweiten Messwert der erste Messwert korrigiert.

Vorzugsweise erfolgt die erfindungsgemäße Eindüsung von Wasser nach den Temperaturmessstellen. Wenn die Gasturbinenregelung es zulässt, kann es aber auch vorteilhaft sein, wenn die Eindüsung von Wasser zwischen der ersten und der zweiten Temperaturmessstelle erfolgt. Dies hat den Vorteil, dass der Gasturbinen-Diffusor, dessen maximale Auslegungstemperatur in der Regel zwischen 600°C bis 630°C liegt, ebenfalls gekühlt wird. Zusätzliche komplizierte regelungstechnische Korrekturen werden deswegen nicht benötigt.

Die Düsen sollen so in den Rauchgaskanal eingebaut werden, dass sie vom Umfang des Abgasdiffusors in die Mitte des Abgasdiffusors eindüsen. Die Düsen werden mit Deionat oder ähnlichem versorgt, indem sie entweder direkt an das Wasser-System des Dampfteils (Wasserdampfkreislauf, z.B. Kondensat) angeschlossen werden. Die Wasserdüsen werden im Rauchgaskanal so angebracht, dass das Abgasfeld in die erste Heizfläche, bezogen auf die Temperatur und die Geschwindigkeit, möglichst homogen bleibt.

Bei einer besonderen Weiterentwicklung wird zur weiteren Steigerung der Verfügbarkeit und Flexibilität der Gas- und Dampfturbinenanlage zusätzlich zur regeltechnischen Anbindung der Wassereinspritzung in das Gasturbinen-Abgas, eine Wassereinspritzungen in die dampfführenden Dampfrohre des Wasser-Dampf-Kreislaufs, insbesondere des Dampferzeugers eingebracht.

Die Wassereinspritzungen in die dampfführenden Dampfrohre des Dampferzeugers sind bereits als Einzelmaßnahme zur Regelung der Dampftemperatur bekannt. In Zusammenwirken mit der erfindungsgemäßen Regelung kann dadurch jedoch die Verfügbarkeit und Flexibilität der Gas- und Dampfkraftwerksanlage wesentlich gegenüber dem bekannten Verfahren der Dampftemperaturregelung gesteigert werden. Außerdem werden die Entwicklungsmöglichkeiten einzelner Komponenten des GuD (vor allem die der Gasturbine) gesteigert. Die Wassereinspritzung in den Wasser-Dampf-Kreislauf wird durch die erfindungsgemäße Regelung entlastet, optimiert und im Zusammenspiel aller Einspritzungen (Wassereindüsung im Abgas und Was-sereinspritzung im Wasser-Dampf-Kreislauf) besser auf die Betriebsweise der Anlage abgestimmt. Der Betreiber bekommt dadurch mehr Regelmöglichkeiten, um die gewünschten Parameter im Wasser-Dampf-Kreislauf, mit Hilfe der bestehenden Leittechnik, auch bei komplizierten physikalischen Vorgängen (z.B.: Anfahren, Laständerungen) schnell und effektiv zu betreiben. Die erfindungsgemäße Regelung der Wassereinspritzung in das Gasturbinen-Abgas und die Wassereinspritzungen in die dampfführenden Dampfrohre des Wasser-Dampf-Kreislaufes werden miteinander verknüpft und in die Leittechnik der Gesamtanlage eingebunden.

Um in dieser Erweiterung die in den Rauchgaskanal einzubringende Wassermenge zu bestimmen, werden neben der mittleren Verbrennungstemperatur der Gasturbine zusätzlich die Dampftemperaturen vor und nach den entsprechenden Wassereinspritzkühlern in den Wasser-Dampf-Kreislauf und die Frischdampftemperaturen zu den Teildampfturbinen in der Regelfunktion mit berücksichtigt. Des Weiteren können auch sonstigen Anforderungen an die Lasttransienten der Gas- oder Dampfturbine, Anfahrtsanforderungen der verschiedenen Komponenten des Kreislaufes oder spezielle Anforderungen der Frequenzregelung des Blockes sowie Eingriffe des Operators mit in der Regelfunktion berücksichtigt werden. Dabei wird die Genauigkeit und Unabhängigkeit der Berechnung der Verbrennungstemperatur in der Gasturbine weiterhin gewährleistet.

Im Wesentlichen bietet die beschriebene Weiterentwicklung der Erfindung gegenüber dem Stand der Technik den Vorteil, dass eine Regelungstechnische Verbindung zwischen Was-sereindüsung in die Dampferzeugerrohre und Einspritzkühlung im Wasser-Dampfkreislauf besteht. Ohne eine solche Verbindung der beiden Systeme ist der Anlagenbetrieb hochgradig komplex, sehr störungsanfällig und sehr wahrscheinlich nicht störungsfrei möglich. Dies begründet sich vor allem dadurch, dass jedes System für ein beschränktes Einsatzgebiet zur Temperaturregelung hat, welches separat angesteuert schnell begrenzt ist. Nur eine Kombination und Abstimmung der beiden Systeme aufeinander schafft eine maßgebende Erweiterung des Anwendungsbereich und der regelungstechnischen Kapazität der Gesamtanlage. Eine Verbindung der Systeme entspannt die einzelnen Grenzen deutlich, bzw. setzt diese so hoch, dass sie durch den Anlagenbetrieb gar nicht mehr erreicht werden. Störfälle und Schäden in diesem Bereich werden deutlich minimiert und die Dynamik der Anlage wird signifikant erhöht.

Die auf eine Vorrichtung gerichtete Aufgabe der Erfindung wird gelöst durch eine Gas- und Dampfturbinenanlage mit einem der Gasturbine über einen Rauchgaskanal nachgeschalteten Dampferzeuger zur Erzeugung von Dampf in einem Wasser-Dampf-Kreislauf der Dampfturbine, mit Düsen zum Einbringen von Wasser in den Rauchgaskanal, wobei die Düsen in Strömungsrichtung des Rauchgases nach wenigstens einer ersten Temperaturmessstelle für die Bestimmung der Verbrennungstemperatur angeordnet sind, und wobei die Wassereindüsung so gesteuert wird, dass aus dieser gemessenen Rauchgas Temperatur eine mittlere Verbrennungstemperatur der Gasturbine bestimmt wird, und die Menge an einzudüsendem Wasser anhand einer Regelfunktion eingestellt wird, der die mittlere Verbrennungstemperatur zu Grunde liegt. Die Vorteile der erfindungsgemäßen Vorrichtung ergeben sich analog aus dem erfindungsgemäßen Verfahren.

Im Folgenden wird die Erfindung anhand einer Figur näher erläutert.

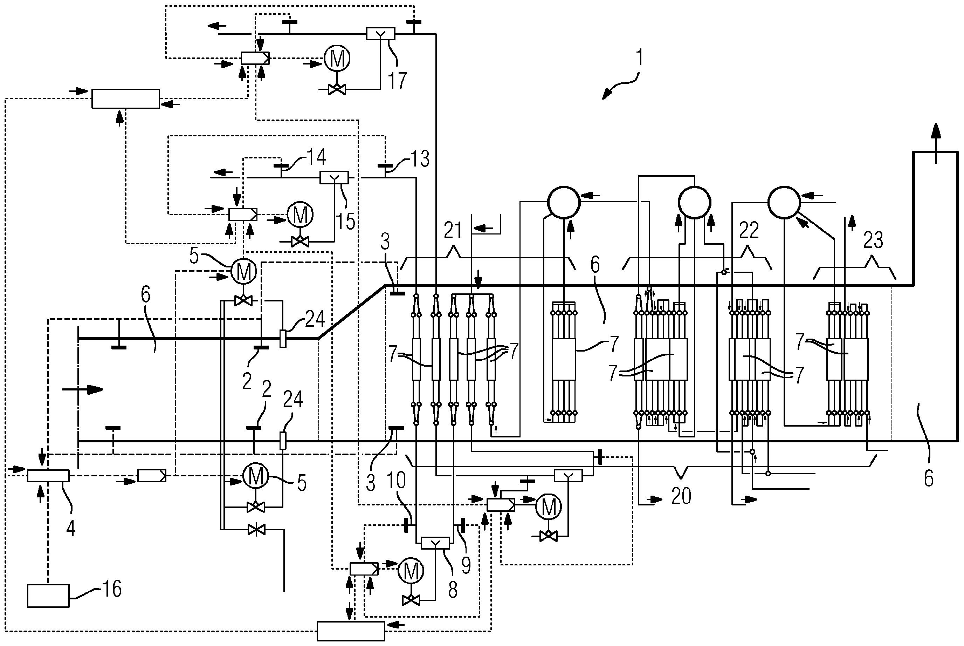

FIG 1 zeigt eine Gas- und Dampfturbinenanlage 1 mit einer erfindungsgemäß geregelten Wassereindüsung in den Rauchgaskanal und Wassereinspritzung in den Wasser-Dampfkreislauf und der Weiterentwicklung mit der Was-sereinspritzung in die Rohre des Dampferzeugers.

Gezeigt ist ein Rauchgaskanal 6, der von links nach rechts von einem Rauchgas durchströmbar ist. Nicht gezeigt ist hier die dem Rauchgaskanal 6 strömungstechnisch vorgeschalteten Gasturbine.

Der Rauchgaskanal 6 umfasst einen Dampferzeuger 20, mit einer Anzahl an Druckstufen 21, 22, 23, die wiederum jeweils eine Anzahl an Heizflächen 7 aufweisen. Im Rauchgaskanal 6 sind in Strömungsrichtung ein erster Temperatursensor 2, eine Düsenanordnung 24 und ein zweiter Temperatursensor 3 derart angeordnet, dass der erste Temperatursensor vor der Düsenanordnung 24, und der zweite Temperatursensor nach der Düsenanordnung positioniert ist.

Erfindungsgemäß wird die Wassereinspritzung durch die Düsenanordnung 24 in den Rauchgaskanal 6 primär durch eine Regelfunktion gesteuert, welche als Steuerungsalgorithmus in einem Kontrollkabinett 4 hinterlegt ist. Zur Umsetzung des Regelsignals sind eine Anzahl an Regelelementen 5 in Form von Ventilen vorgesehen. Die Düsenanordnung 24 umfasst eine Anzahl an Düsen, die jeweils mit einem eigenen zugehörigen Regelelement 5 geregelt werden.

Der Regelalgorithmums wird anhand einer festgelegten Analyse sowohl eines externen Parameters 16, als auch interner Signale bestimmt.

Zu den internen Signalen zählen die Temperaturen des ersten Temperatursensors 2 und des zweiten Temperatursensors 3, sowie Signale aus den Regelausgängen der Druckstufen 21, 22, 23 (insbesondere Hochdruckstufe, Zwischenüberhitzer, und der End- und Zwischenein-spritzkühler).

Durch die Anwendung der Temperatursignale 2 und 3 in der Steuerung sowie der Anordnung der Wassereindüsung im Rauchgaskanal 6 hinter den Temperaturmessstelle 2, wird die Gasturbinenregelung nicht beeinflusst.

Figur 1 zeigt weiterhin Merkmale der bevorzugten Ausführungsform der Erfindung mit einer zusätzlichen Wassereinspritzung in die Rohre des Dampferzeugers. Die Wassereinspritzung erfolgt in die Dampfrohre der Druckstufe 21. Vorgesehen ist eine Wassereinspritzung vor dem Hochdruckteil 8, eine Wassereinspritzung nach dem Hochdruckteil 12, eine Wassereinspritzung vor der Zwischenüberhitzung 15 und eine Wassereinspritzung nach der Zwischenüberhitzung 17.

Jede der Wassereinspritzvorrichtungen 8, 12, 15 und 17 werden über ein jeweiliges Stellglied gesteuert, wobei jedes Stellglied ein dazugehöriges Regelelement aufweist. Die Regelelemente erhalten jeweils Signale, die vom Kontrollkabinett 4 beeinflusst werden. Dazu sind alle Regelelemente mit dem Kontrollkabinett 4 verbunden.

Jedes der Regelelemente zur Steuerung der jeweiligen Stellglieder weist zudem jeweils einen Temperatursensor vor der jeweiligen Einspritzstelle, und einen Temperatursensor nach der jeweiligen Einspritzstelle auf.

So weist beispielsweise die Wassereinspritzung vor dem Hochdruckteil 8 einen Temperatursensor 9 vor der Wassereinspritzung 8, und einen Temperatursensor 10 nach der Wassereinspritzung 8 auf. Die Wassereinspritzung nach dem Hochdruckteil 12 weist einen Temperatursensor 13 vor der Wassereinspritzung 12, und einen Temperatursensor 14 nach der Wassereinspritzung 12 auf.

Anzahl, Design und Anordnung der Wasserdüsen im Rauchgaskanal 6 sowie die minimale und maximale Einspritzwassermenge, -temperatur und -druck, werden so ausgewählt, dass das Rauchgas an der ersten Heizfläche der ersten Druckstufe 21 möglichst homogen in Temperatur, Geschwindigkeit und Konzentration vorliegt.

## Patentansprüche

1. Verfahren zum Betreiben einer Gas- und Dampfturbinenanlage (1), bei dem die im entspannten Rauchgas der Gasturbine enthaltene Wärme zur Erzeugung von Dampf für die Dampfturbine genutzt wird, wobei zur Vermeidung eines kritischen Betriebszustands die Temperatur des entspannten Rauchgases durch Einbringen von Wasser in das entspannte Rauchgas in den Rauchgaskanal (6) zwischen der Gasturbine und dem strömungstechnisch nachgeschalteten Abhitzedampferzeuger (20) verringert wird, wobei die Menge an einzubringendem Wasser in Abhängigkeit von der Rauchgastemperatur bestimmt wird,
**dadurch gekennzeichnet, dass** wenigstens eine erste Rauchgastemperatur strömungstechnisch vor der Einbringung von Wasser in das Rauchgas gemessen wird, aus der Rauchgastemperatur eine mittlere Verbrennungstemperatur der Brennkammer der Gasturbine bestimmt wird, und die einzubringende Menge an Wasser anhand der mittleren Verbrennungstemperatur eingestellt wird.

2. Verfahren nach Anspruch 1, bei dem die Verbrennungstemperatur anhand einer Funktion aus der mittleren Rauchgastemperatur im Rauchgaskanal, aus einer oder mehreren Temperaturen des Dampfes in verschiedenen Druckstufen des Abhitzedampferzeugers (20), aus Lasttransienten der rotierenden Maschinen der Gas- und Dampfturbinenanlage (1) sowie aus der regeltechnischen Anforderungen der Dampfturbine eingestellt wird.

3. Verfahren nach Ansprüchen 1 oder 2, wobei zur weiteren Steigerung der Verfügbarkeit und Flexibilität der Gas- und Dampfturbinenanlage (1) zusätzlich zur Einbringung von Wasser in den Rauchgaskanal (6), Wasser in die dampfführenden Dampfrohre des Wasser-Dampf-Kreislaufes eingebracht wird.

4. Gas- und Dampfturbinenanlage (1) mit einem der Gasturbine über einen Rauchgaskanal (6) nachgeschalteten Dampferzeuger (20) zur Erzeugung von Dampf in einem Wasser-Dampf-Kreislauf der Dampfturbine zur Durchführung des Verfahrens nach einem der Ansprüche 1 bis 3, mit einer Düsenanordnung (24) zum Einbringen von Wasser in den Rauchgaskanal (6), **dadurch gekennzeichnet, dass** die Düsenanordnung (24) in Strömungsrichtung des Rauchgases nach den Temperaturmess-stellen (2) für die Bestimmung der Verbrennungstemperatur und Schutzeinrichtung für den Rauchgaskanal (6) angeordnet sind, und wobei die Wassereindüsung so gesteuert wird, dass aus dieser gemessenen Rauchgas Temperatur eine mittlere Verbrennungstemperatur der Gasturbine bestimmt wird, und die Menge an einzudüsendem Wasser anhand einer Regelfunktion eingestellt wird, der die mittlere Verbrennungstemperatur zu Grunde liegt.

5. Gas- und Dampfturbinenanlage nach Anspruch 4, **dadurch gekennzeichnet, dass** die Düsenanordnung (24) ausgestaltet ist, um bei allen Betriebszuständen das eindüsbare Wasser vollständig zu verdampfen und eine Ausfällung zu vermie-den.

## Claims

1. Method for operating a gas and steam turbine installation (1), in which the heat contained in the expanded flue gas of the gas turbine is used to generate steam for the steam turbine, wherein, to avoid a critical operating state, the temperature of the expanded flue gas is reduced by introducing water into the expanded flue gas in the flue gas duct (6) between the gas turbine and the waste-heat steam generator (20) connected downstream with regard to flow, wherein the amount of water to be introduced is determined in dependence on the flue gas temperature,
**characterized in that** at least a first flue gas temperature is measured ahead of the introduction of water into the flue gas with regard to flow, an average combustion temperature of the combustion chamber of the gas turbine is determined from the flue gas temperature, and the amount of water to be introduced is set on the basis of the average combustion temperature.

2. Method according to Claim 1, in which the combustion temperature is set on the basis of a function derived from the average flue gas temperature in the flue gas duct, from one or more temperatures of the steam in various pressure stages of the waste-heat steam generator (20), from load transients of the rotating machines of the gas and steam turbine installation (1) and from the control requirements for the steam turbine.

3. Method according to Claim 1 or 2, wherein, to further increase the availability and flexibility of the gas and steam turbine installation (1), water is introduced into the steam-carrying steam tubes of the water-steam circuit in addition to the introduction of water into the flue gas duct (6).

4. Gas and steam turbine installation (1) having a steam generator (20), connected downstream of the gas turbine by way of a flue gas duct (6), for generating steam in a water-steam circuit of the steam turbine for carrying out the method according to one of Claims 1 to 3, having a nozzle arrangement (24) for introducing water into the flue gas duct (6), **characterized in that** the nozzle arrangement (24) is arranged after the temperature measuring points (2) for determining the combustion temperature and a protection device for the flue gas duct (6) in the direction of flow of the flue gas, and wherein the water injection is controlled such that an average combustion temperature of the gas turbine is determined from this measured flue gas temperature, and the amount of water to be injected is set on the basis of a control function based on the average combustion temperature.

5. Gas and steam turbine installation according to Claim 4, **characterized in that** the nozzle arrangement (24) is configured to completely vaporize the water that can be sprayed in and to avoid precipitation in all operating states.

## Revendications

1. Procédé pour faire fonctionner une installation (1) de turbine à gaz et turbine à vapeur, dans lequel on utilise, pour la turbine à vapeur, la chaleur contenue dans le gaz de fumée détendu de la turbine à gaz, dans lequel, pour empêcher un état de fonctionnement critique, on abaisse la température du gaz de fumée détendu par introduction d'eau dans le gaz de fumée détendu dans le conduit (6) pour le gaz de fumée, entre la turbine à gaz et le générateur (20) de vapeur à récupération de la chaleur perdue en aval en technique d'écoulement, la quantité d'eau introduite étant déterminée en fonction de la température du gaz de fumée,
**caractérisé en ce que** l'on mesure au moins une première température du gaz de fumée en technique d'écoulement, avant l'introduction d'eau dans le gaz de fumée, on détermine, à partir de la température du gaz de fumée, une température de combustion moyenne de la chambre de combustion de la turbine à gaz et on règle la quantité d'eau à introduire à l'aide de la température de combustion moyenne.

2. Procédé suivant la revendication 1, dans lequel on règle la température de combustion à l'aide d'une fonction composée de la température moyenne du gaz de fumée dans le conduit pour le gaz de fumée, d'une ou de plusieurs températures de la vapeur dans des étages de pression différents du générateur (20) de vapeur à récupération de la chaleur perdue, de transitions de charge des machines tournantes de l'installation (1) de turbine à gaz et turbine à vapeur, ainsi que des exigences en technique de régulation de la turbine à vapeur.

3. Procédé suivant les revendications 1 ou 2, dans lequel, pour augmenter davantage la disponibilité et la souplesse de l'installation (1) de turbine à gaz et turbine à vapeur, on introduit, supplémentairement à l'introduction d'eau dans le conduit (6) pour le gaz de fumée, de l'eau dans les tubes de vapeur conduisant de la vapeur du circuit eau-vapeur.

4. Installation (1) de turbine à gaz et turbine à vapeur, comprenant un générateur (20) de vapeur, monté en aval de la turbine à gaz par un conduit (6) pour du gaz de fumée, pour produire de la vapeur dans un circuit eau-vapeur de la turbine à vapeur, afin d'effectuer le procédé suivant l'une des revendications 1 à 3, comprenant un agencement (24) de buse pour introduire de l'eau dans le conduit (6) pour du gaz de fumée, **caractérisée en ce que** l'agencement (24) de buse est, considéré dans le sens de passage du gaz de fumée, monté après les points (2) de mesure de la température pour la détermination de la température de combustion et du dispositif de protection du conduit (6) pour le gaz de fumée et dans lequel l'injection d'eau est commandée, de manière à déterminer une température de combustion moyenne de la turbine à gaz, à partir de cette température mesurée du gaz de fumée et la quantité d'eau injectée est réglée, à l'aide d'une fonction de régulation, sur la base de la température de combustion moyenne.

5. Installation de turbine à gaz et turbine à vapeur suivant la revendication 4, **caractérisée en ce que** l'agencement (24) de buse est conformé pour évaporer complètement, dans tous les états de fonctionnement, l'eau qui peut être injectée et empêcher une panne.
